# EUROPEAN PATENT SPECIFICATION

(11) **EP 1 130 751 B1**
(45) Date of publication and mention of the grant of the patent: **22.06.2016**
(21) Application number: 01103936.9
(22) Date of filing: 19.02.2001
(51) Int. Cl.: H02M 1/32, H02M 3/338

(54) **Switched mode power supply with protection circuit against overvoltage**
Schaltnetzteil mit einer Schutzschaltung gegen Überspannung
Alimentation de puissance à découpage avec un circuit de protection contre une surtension

(30) Priority: 02.03.2000 EP 00104246
(43) Date of publication of application: 05.09.2001
(73) Proprietor: THOMSON multimedia S.A., 92648 Boulogne Cedex (FR)
(72) Inventor: Koh, Kian Meng, Singapore 731897 (SG); NG, Seng Huat, Singapore 680154 (SG); Zee, Kum Yoong, 81100 Johor (MY)
(74) Representative: Arnold, Klaus-Peter

(56) References cited:
- WO-A-85/00933
- DE-A- 3 638 035
- DE-A1- 19 735 208
- US-A- 3 660 724
- US-A- 3 816 809
- US-A- 4 130 862
- US-A- 5 506 764
- US-A- 5 796 596
- US-A- 6 031 734

## Description

The present invention relates to a protection circuit for a switched mode power supply, which comprises a switching transistor and a transformer with a primary winding and an auxiliary winding for providing a supply voltage for driving the switching transistor.

A switched mode power supply of this kind is known for example from EP-A-0 936 726, which discloses self oscillating switched mode power supplies operating in a flyback mode. Specifically, Fig. 2 of EP-A-0 936 726 shows a switched mode power supply with a MOSFET as a switching transistor and a gate driver circuit comprising a charge capacitor being coupled via a diode to an auxiliary winding for providing a supply voltage for the gate driver circuit. It comprises further a threshold circuit, which keeps the gate driver circuit turned off after the switching-on of the switched mode power supply, until the supply voltage of the driver circuit has exceeded a specific threshold value with respect to the auxiliary winding. It comprises also an opto-coupler for providing a regulating voltage from the secondary side of the power supply for the gate driver circuit for stabilizing output voltages.

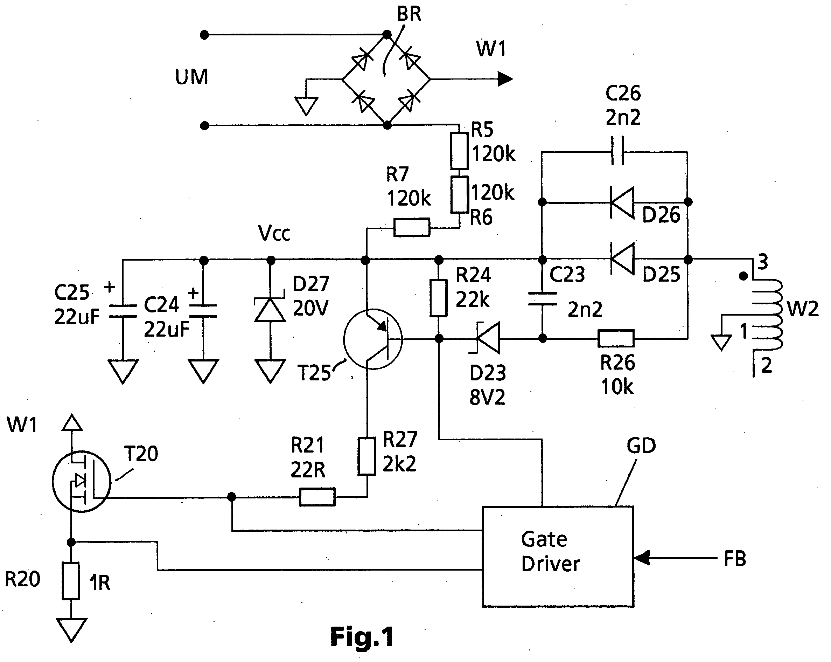

A switched mode power supply as described before, which contains a protection circuit, is shown in Fig. 1. It comprises a switching transistor T20, which is connected with its current input to a primary winding W1 of a transformer, not shown, and with its current output via a resistor R20 to ground. The primary winding W1 is coupled in the usual manner to a rectifying element BR, which provides a rectified voltage from the mains voltage UM.

The transformer comprises further an auxiliary winding W2 for providing a supply voltage Vcc. The voltage Vcc is a rectified and smoothed voltage, rectified via diodes D25 and D26 which are connected to a terminal 3 of the auxiliary winding 2, and stabilized via capacitors C25 and C24 and a Zener diode D27. The power supply comprises further a start-up circuit with resistors R5, R6, R7 being connected to the capacitors C25 and C24 and to the rectifying element BR, and a gate driver circuit GD.

The gate driver circuit GD controls a transistor T25 which is coupled to the supply voltage Vcc for providing a switching-on voltage to the control electrode of the switching transistor T20 via resistors R21, R27 for switching through this transistor. Via the gate driver circuit GD the output voltages of the power supply are stabilized , a control circuit of this kind is explained for example in EP-A-0 936 726.

The base of transistor T25, together with the gate driver circuit GD, is connected to a threshold circuit with a Zener diode D23 and resistors R24, R26 for keeping the transistor T25 off after switching-on of the power supply, until the supply voltage Vcc has reached a sufficiently high voltage value for the start-up of the power supply. The power supply comprises further small capacitors C23 and C26 to suppress voltage spikes of the corresponding diodes.

The Zener diode D27 of Fig. 1 provides also an over voltage protection for the power supply. In a failure mode, when the output voltage at the auxiliary winding W2 shoots up, the voltage Vcc at capacitors C24, C25 will also rise accordingly, but is clamped by the Zener diode D27, in this embodiment to 20 Volts. Therefore, the current flowing through Zener diode D27 will increase which will finally kill this diode when reaching a certain current value. Once the Zener diode D27 is destroyed, it will become short circuited, which will shut off the switched mode power supply immediately because the supply voltage Vcc drops.

The switched mode power supply of Fig. 1 has also an under-drive protection, which ensures that there is always a sufficient gate drive for switching through the switching transistor T20 even during a failure condition. This requirement is necessary due to safety reasons. This problem is solved in that two diodes D25, D26 and two capacitors C24, C25 are arranged each in parallel, to provide always a supply voltage Vcc, even when one of the diodes or one of the capacitors is open circuited.

The over voltage protection as described before is only working in switched mode power supplies with higher output power, for example 70 Watts, but not with switched mode power supplies limited to about 30 Watts, because then the current flowing through the Zener diode 027 is too low to destroy the Zener diode in case of an over voltage failure mode. In this case the output voltages of the power supply will continue to rise and this will damage the respective components of the device, for example capacitors and integrated circuits.

US 3,660,724 discloses a switched mode power supply having a clamping circuit with a switching element and a threshold circuit for disabling the switching cycles of a switching transistor in case of an overvoltage condition.

The object of the present invention is therefore, to provide a protection circuit, which works also reliably within a low power switched mode power supply, and to provide a respective switched mode power supply.

This object is achieved for for a switched mode power supply by means of the invention as specified in claim 1. An advantageous development of the invention is specified in the subclaim.

The protection circuit of the present invention comprises a clamping circuit with a switching element for reducing said supply voltage in case of an overvoltage condition, and a holding circuit for providing a holding current for said clamping circuit. With the holding current, the switch-off time in case of a failure is extended which avoids therefore an immediate start-up of the power supply when the supply voltage is reduced, and which would lead to a hiccup stage.

The clamping circuit comprises a threshold circuit, which provides advantageously a switching voltage for the switching element when the supply voltage reaches an upper voltage limit. The switching element is connected to a charge capacitor which provides the supply voltage for the switching transistor, and by reducing this supply voltage, the switching of the switching transistor is disabled.

The holding circuit comprises a capacitor which is coupled via a resistor to the clamping circuit, especially to the threshold circuit, for providing an additional current in an overvoltage condition. The capacitor of the holding circuit is connected via a rectifying element to an auxiliary winding of the transformer.

The protection circuit is used for a switched mode power supply comprising a transformer with a primary winding and an auxiliary winding, and a switching transistor which is coupled to said primary winding and which is operating especially in a flyback mode. It works not only in power supplies with low power applications but also in power supplies providing high output power. For smaller switched mode power supplies, it is especially advantageous to use a MOSFET as a switching transistor and the clamping circuit therefore disables directly the gate drive of the MOSFET in case of an over voltage condition. Low power supplies for example with an output power of 30 Watts can be used for example as a second power supply within appliances of consumer electronics products.

The invention is explained in more detail below by way of a preferred embodiment, with reference to schematic circuit diagrams, in which:
Figure 1: A circuit with a Zener diode for providing an overvoltage protection for a switched mode power supply, and
Figure 2: A protection circuit with a clamping circuit and a holding circuit according to the invention.

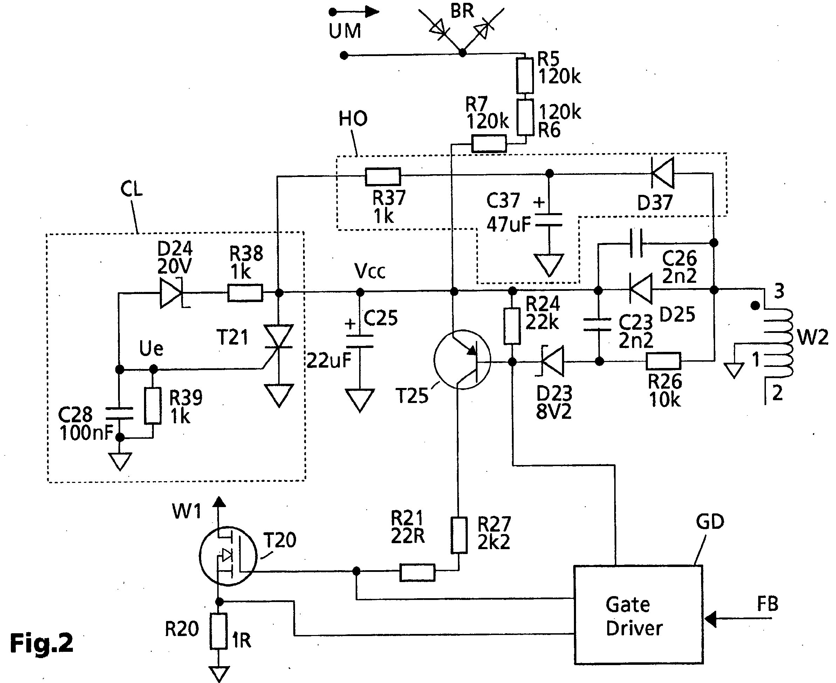

In figure 2 the primary side of a switched mode power supply is shown with a MOSFET as a switching transistor T20, which is coupled with the current input to a primary winding W1 of a transformer (not shown) and with a current output via resistor R20 to ground. Other types of switching transistors can be used accordingly. To the other end of the primary winding W1 a DC voltage is coupled in a known manner which is provided in this embodiment from the mains voltage UM via a rectifying element BR. To the rectifying element BR also the start-up circuit with resistors R5, R6 and R7 is coupled.

The control input of the switching transistor T20 is controlled via a transistor T25, which is connected with its current input to a supply voltage Vcc. The supply voltage Vcc is provided from the auxiliary winding W2 of the transformer via a rectifying element D25 and is smoothed via a charge capacitor C25. A gate driver circuit GD, shown only schematically, provides switching pulses for the transistor T25 for regulating the output voltages of the power supply. When the transistor T25 is switched through, the supply voltage Vcc is coupled via resistors R21 and R27 to the gate electrode of the switching transistor T20, and when the transistor T25 closes, the switching transistor T20 is also closed via the gate driver circuit GD.

The basic components of the switched mode power supply as shown in figure 2 is similar to the circuit as already described according to figure 1, and which operating principles are described in detail in EPA-0 936 726. Circuit components in figure 2 which are the same as in the figure 1 have same reference numbers.

To the charge capacitor C25 a clamping circuit CL is coupled for providing an overvoltage protection. It comprises a switching element T21, in this embodiment a thyristor, which disables the gate drive of the switching transistor T20 when switched through, in that the supply voltage Vcc is connected to ground. The control electrode of the switching element T21 is controlled via a threshold circuit with a Zener diode D24 and a resistor R38 which provides a switching voltage Ue when the supply voltage Vcc exceeds a certain threshold, in this example 20 Volts. When the Zener diode D24 starts conducting, the control voltage Ue shoots up and triggers the switching element T21. The control electrode of the switching element T21 is coupled via a resistor R39 and a capacitor C28 in parallel to ground for disabling the control voltage Ue when the Zener diode D24 stops conducting.

When the supply voltage Vcc drops below the threshold value of the threshold circuit D24, R38, then also the control voltage Ue drops which closes the switching element T21. Then the power supply will start-up again and, when the overvoltage condition still appears, will shut down again when the threshold value is exceeded. In this case the power supply would be in a hiccup stage which would be an additional stress for the power supply and would make a switching sound which could be heard by a user.

To suppress this hiccup stage, the power supply comprises a holding circuit HO. This holding circuit provides an additional current for the clamping circuit CL to turn the switching element T21 on for a longer period. The holding circuit HO comprises a capacitor C37 in which a charge is stored during normal operation and which is connected to the clamping circuit CL via a resistor R37. In this embodiment the capacitor C37 is coupled to the auxiliary winding W2 of the transformer, but it can be coupled also to another part of the power supply, for example to the start-up circuit. With the additional holding current, the annoying switching sound of the hiccup stage is modified to a more smoother tone.

The clamping circuit CL is very sensitive to an overvoltage condition of the supply voltage Vcc because of the threshold circuit D24, R38 and the switching element T21. It provides therefore an overvoltage protection for switched mode power supplies with high output power as well as for switched mode power supplies with low output power. In addition, the clamping circuit CL together with the holding circuit HO provide also an under drive protection, as can be seen from figure 2. In the case the diode D25 is open circuited, the power supply has the additional current path via D37 and R37 to charge the charge capacitor C25. And in the case capacitor C25 is open circuited, the capacitor C37 is available to provide the necessary gate drive voltage for the switching transistor T20. Therefore, with a few additional components a reliable circuit is provided which provides an overvoltage protection as well as an under drive protection.

The overvoltage protection circuit as explained is not restricted for a use with a power supply as described with regard to figure 2. Applications for other power supplies, for example for a DC-DC converter, are also possible.

## Claims

1. A switched mode power supply comprising
a first rectifying element (BR) for providing a DC voltage from a mains voltage (UM),
a transformer with a primary winding (W1) and an auxiliary winding (W2), said primary winding (W1) being coupled to the first rectifying element (BR) and to a switching transistor (T20),
a charge capacitor (C25),
a start-up circuit (R5-R7) arranged between the first rectifying element (BR) and the charge capacitor (C25),
a second rectifying element (D25) arranged between said auxiliary winding (W2) and said charge capacitor (C25) for providing a supply voltage (Vcc) for said switching transistor (T20), and
a protection circuit,
**characterized in that** the protection circuit comprises
a clamping circuit (CL) coupled in parallel to said charge capacitor (C25), the clamping circuit comprising a switching element (T21) and a threshold circuit (D24, R38) coupled to the control electrode of the switching element (T21) for reducing said supply voltage (Vcc) and for disabling the switching cycles of said switching transistor (T20) in case of an over-voltage condition, and
a holding circuit (HO) comprising a second capacitor (C37) being coupled via a third rectifying element (D37) to said auxiliary winding (W2) and via a resistor (R37) to said clamping circuit (CL) and to said charge capacitor (C25), said second capacitor (C37) providing a holding current for said clamping circuit (CL) in case of said over-voltage condition.

2. Protection circuit according to claim 1, **characterized in that** said threshold circuit (D24, R38) comprises a Zener diode (D24) being coupled to the control electrode of said switching element (T21) for providing the control voltage (Ue) in case of an overvoltage condition.

## Patentansprüche

1. Schaltleistungsversorgung, die umfasst:
ein erstes Gleichrichtungselement (BR) zum Bereitstellen einer Gleichspannung von einer Netzspannung (UM),
einen Transformator mit einer Primärwicklung (W1) und mit einer Zusatzwicklung (W2), wobei die Primärwicklung (W1) mit dem ersten Gleichrichtungselement (BR) und mit einem Schalttransistor (T20) gekoppelt ist,
einen Ladekondensator (C25),
eine Startschaltung (R5-R7), die zwischen dem ersten Gleichrichtungselement (BR) und dem Ladekondensator (C25) angeordnet ist,
ein zweites Gleichrichtungselement (D25), das zwischen der Zusatzwicklung (W2) und dem Ladekondensator (C25) angeordnet ist, um eine Versorgungsspannung (Vcc) für den Schalttransistor (T20) bereitzustellen, und
eine Schutzschaltung,
**dadurch gekennzeichnet, dass** die Schutzschaltung umfasst:
eine Klemmschaltung (CL), die zu dem Ladekondensator (C25) parallelgeschaltet ist, wobei die Klemmschaltung ein Schaltelement (T21) und eine Schwellenwertschaltung (D24, R38), die mit der Steuerelektrode des Schaltelements (T21) gekoppelt ist, um im Fall eines Überspannungszustands die Versorgungsspannung (Vcc) zu verringern und die Schaltzyklen des Schalttransistors (T20) zu sperren, umfasst, und
eine Halteschaltung (HO), die einen zweiten Kondensator (C37) umfasst, der über ein drittes Gleichrichtungselement (D37) mit der Zusatzwicklung (W2) und über einen Widerstand (R37) mit der Klemmschaltung (CL) und mit dem Ladekondensator (C25) gekoppelt ist, wobei der zweite Kondensator (C37) im Fall des Überspannungszustands einen Haltestrom für die Klemmschaltung (CL) bereitstellt.

2. Schutzschaltung nach Anspruch 1, **dadurch gekennzeichnet, dass** die Schwellenschaltung (D24, R38) eine Zener-Diode (D24) umfasst, die mit der Steuerelektrode des Schaltelements (T21) gekoppelt ist, um im Fall eines Überspannungszustands die Steuerspannung (Ue) bereitzustellen.

## Revendications

1. Une alimentation de puissance à découpage comprenant un premier élément de redressement (BR) pour fournir une tension CC depuis une tension de secteur (UM),
un transformateur avec un enroulement principal (W1) et un enroulement auxiliaire (W2), ledit enroulement principal (W1) étant couplé au premier élément de redressement (BR) et à un transistor de communication (T20), un condensateur de charge (C25),
un circuit de démarrage (R5-R7) disposé entre le premier élément de redressement (BR) et le condensateur de charge (C25),
un deuxième élément de redressement (D25) disposé entre ledit enroulement auxiliaire (W2) et ledit condensateur de charge (C25) pour fournir une tension d'alimentation (Vcc) pour ledit transistor de commutation (T20), et un circuit de protection,
**caractérisé en ce que** le circuit de protection comprend
un circuit de verrouillage (CL) couplé en parallèle audit condensateur de charge (C25), le circuit de verrouillage comprenant un élément de commutation (T21) et un circuit de seuil (D24, R38) couplé à l'électrode de commande de l'élément de commutation (T21) pour réduire ladite tension d'alimentation (Vcc) et pour désactiver les cycles de commutation dudit transistor de commutation (T20) en cas d'un état de surtension, et
un circuit de maintien (HO) comprenant un deuxième condensateur (C37) couplé via un troisième élément de redressement (D37) audit enroulement auxiliaire (W2) et via une résistance (R37) audit circuit de verrouillage (CL) et audit condensateur de charge (C25), ledit deuxième condensateur (C37) fournissant un courant de maintien pour ledit circuit de verrouillage (CL) en cas d'état de surtension.

2. Un circuit de protection selon la revendication 1, **caractérisé en ce que** ledit circuit de seuil (D24, R38) comprend une diode Zener (D24) couplée à l'électrode de commande dudit élément de commutation (T21) pour fournir la tension de commande (Ue) en cas d'état de surtension.
